# EUROPÄISCHE PATENTSCHRIFT

(11) **EP 2 127 453 B1**
(45) Veröffentlichungstag und Bekanntmachung des Hinweises auf die Patenterteilung: **06.08.2014**
(21) Anmeldenummer: 07856823.5
(22) Anmeldetag: 18.12.2007
(51) Int. Cl.: H04W 12/12

(54) **VERFAHREN ZUR FRAUDERKENNUNG BEI ROAMINGVERBINDUNGEN IN MOBILEN KOMMUNIKATIONSNETZEN**
METHOD FOR FRAUD RECOGNITION IN THE CASE OF ROAMING CONNECTIONS IN MOBILE COMMUNICATION NETWORKS
PROCÉDÉ DE DÉTECTION DE FRAUDE DANS DES COMMUNICATIONS ITINÉRANTES DANS DES RÉSEAUX DE COMMUNICATION MOBILES

(30) Priorität: 22.12.2006 DE 102006062210
(43) Veröffentlichungstag der Anmeldung: 02.12.2009
(73) Patentinhaber: Deutsche Telekom AG, 53113 Bonn (DE)
(72) Erfinder: HABERKORN, Günter, 92262 Birgland/Schwend (DE)
(74) Vertreter: Riebling, Peter
(86) Internationale Anmeldenummer: PCT/EP2007/011091
(87) Internationale Veröffentlichungsnummer: WO 2008/077528

(56) Entgegenhaltungen:
- DE-A1- 19 905 884
- US-A1- 2005 084 083
- BLACK, JIM: "Real-Time Fraud Management Using SS7" B/OSS BILLING & OSS WORLD, [Online] 1. August 1999 (1999-08-01), XP002479116 Gefunden im Internet: URL:http://www.billingworld.com/articles/a rchives/Real-Time-Fraud-Management-Using-S S7,1.html#> [gefunden am 2008-05-05]
- BURGE P ET AL: "Fraud detection and management in mobile telecommunications networks" SECURITY AND DETECTION, 1997. ECOS 97., EUROPEAN CONFERENCE ON LONDON, UK 28-30 APRIL 1997, LONDON, UK,IEE, UK, 28. April 1997 (1997-04-28), Seiten 91-96, XP006507536 ISBN: 978-0-85296-683-9

## Beschreibung

Die Erfindung betrifft ein Verfahren zur Frauderkennung (Fraud = Betrug) in mobilen Kommunikationsnetzen, und insbesondere ein Verfahren zur Frauderkennung bei Roamingverbindungen, auch bezeichnet als so genannter Roaming-Fraud

Durch Roaming-Fraud entstehen den Betreibern von Mobilfunknetzen und auch den Providern Verluste in Millionenhöhe pro Jahr.
Beim Roaming-Fraud werden Teilnehmeridentitätsmodule, so genannte SIM-Karten (SIM: Subscriber Identity Module), unter Angabe falscher Identität bzw. durch erpresserische Mittel beschafft. Anschließend werden mit diesen SIM-Karten im Ausland, also innerhalb ausländischer Mobilfunknetze (Roaming-Netze: FPLMN) permanent Verbindungen zu internationalen Zielen (in Höchst-Tarifstufen) wie z.B. zu Südsee-Inseln aufgebaut. Es handelt sich in der Regel um Dauerverbindungen (teilweise auch Mehrfachverbindungen via Multi-Party), welche zu Zeiten außerhalb der Regelarbeitszeit (z.B. Wochenende) aufgebaut werden. Gerade an Wochenenden kommt es zu Verzögerungen beim Heimatnetzwerk (HPLMN), diese Aktivitäten frühzeitig zu erkennen und Gegenmaßnahmen einzuleiten. Sogenannte "High-Usage-Reports", die eine massive Nutzung von Roamingverbindungen aufdecken, können teilweise erst nach einigen Tagen vom Roaming-Netzwerk an das Heimatnetzwerk übermittelt werden. Beispielsweise können mit nur drei SIM-Karten durch die oben genannten Verbindungsszenarien an einem Wochenende mehrere tausend Euro Verlust für einen Netzbetreiber entstehen.

Bei T-Mobile Deutschland besteht ein Missbrauchserkennungssystem (MEGS), das verschiedene Filter zur frühzeitigen Erkennung von Roaming-Fraud umfasst. Hierbei werden beispielsweise typische Filterkriterien angewandt wie:
- SIM-Karte wird erstmalig benutzt und bucht sich im Ausland ein
- Es handelt sich um eine Postpaid-Karte
- Typische Roamingpartner werden verwendet (network scoring)
- Der Kunde ist kein Business-Kunde
- andere Filterkriterien

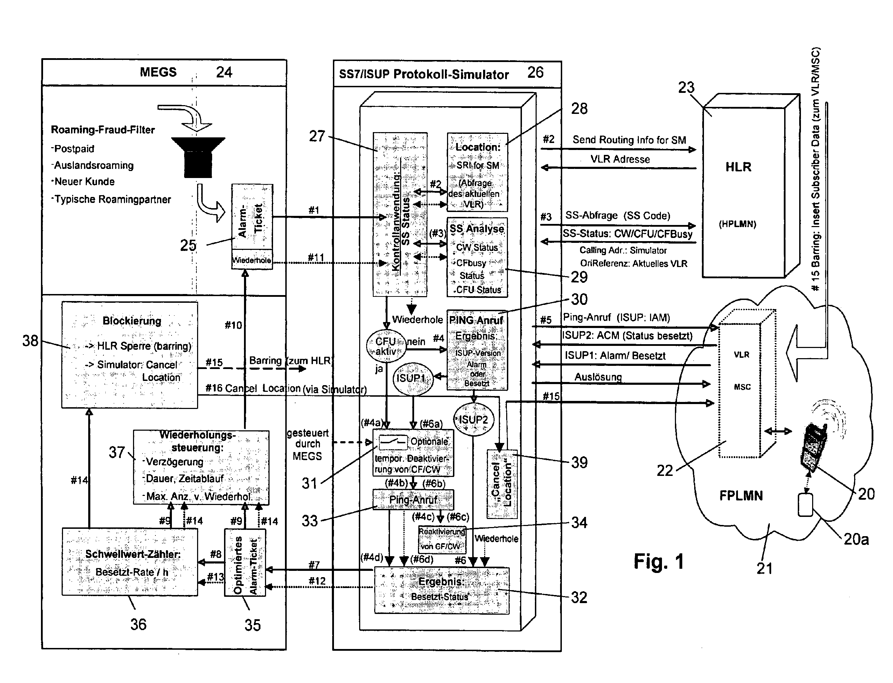

Das MEGS ist in Figur 1, links oben, schematisch dargestellt. Werden bei einer SIM-Karte die oben genannten Kriterien festgestellt, so wird ein Alarm-Ticket ausgegeben. Leider liegt die Erfolgsquote mit dieser Erkennungsmethode derzeit nur bei wenigen Prozent, d.h. von 100 Alarm-Tickets bezeichnen nur, einige wenige tatsächlich Fälle von Roaming Fraud. Da die MEGS Filterkriterien meist nicht nur auf Betrüger sonder auch auf viele "normale" Kunden zutreffen, kann es zu einer zu großen Alarmflut (>100/Tag) beim MEGS kommen. Zum Schutz der "normalen" Kunden können nur in den wenigen Fällen mit gesichertem Verdacht auf Betrug Sanktionsmaßnahmen angewandt werden. Die massiven Verluste durch Roaming-Fraud bleiben somit im Wesentlichen weiterhin bestehen.

US 2005 0084083 A1 offenbart ein Verfahren zur Frauderkennurig in einem Kommunikationsnetz, bei dem Gesprächsverbindungen durch ein Missbrauchserkennungssystem anhand von festgelegten Regeln auf einen möglichen Missbrauch überprüft werden. Ein mögliches Kriterium ist hierbei die Dauer der Gesprächsverbindungen, die einen gewissen Schwellenwert nicht überschreiten dürfen. Für Verbindungen im Festnetz lässt sich das relativ einfach realisieren. Eine Lösung für Mobilfunkverbindungen, insbesondere Roamingverbindungen, ist hier nicht erwähnt.

Aus diesem Grund ist es die Aufgabe der Erfindung, ein Verfahren zur Frauderkennung bei Roamingverbindungen in mobilen Kommunikationsnetzen anzugeben, das im Vergleich zum bisher angewendeten Verfahren (MEGS) eine wesentlich höhere Positiv-Erkennungsrate aufweist.

Diese Aufgabe wird erfindungsgemäß durch die Merkmale des unabhängigen Anspruchs gelöst.

Bevorzugte Ausgestaltungen und weitere vorteilhafte Merkmale der Erfindung sind in den abhängigen Ansprüchen angegeben,

Es wurde erkannt, dass bei abgehenden Verbindungen im Ausland bisher keine Signalisierungs-Verbindung in Richtung Heimatnetzbetreiber stattfindet. Dies erschwert die Erkennung im Heimatnetzwerk (HPLMN), welche der von MEGS erkannten Kunden im Ausland eine Dauerverbindung über mehrere Stunden durchführen.

Erfindungsgemäß wird daher als eindeutiges, zusätzliches Kriterium zu dem von MEGS bereits implementierten Filter die "Besetzt-Rate" der betreffenden SIM-Karten gewertet. Das heißt, dass bei den durch MEGS erkannten auffälligen SIM-Karten zusätzlich festgestellt wird, ob eine Dauerverbindung über einen längeren Zeitraum (z.B. mehrere Stunden) besteht. Ist dies der Fall, kann eine eindeutige und frühzeitige Gegenmaßnahme eingeleitet werden. Durch schnelle Sperrung der betreffenden SIM-Karte kann somit der Gesamtschaden erheblich (meist um bis zu 95%) gesenkt werden. Andere Kunden, welche durch die bisherigen MEGS Erkennungsmethoden erfasst wurden, bleiben von diesen Maßnahmen unberührt.

Durch die Anwendung eines Testanrufs (ohne Rufnummernanzeige), im folgenden PING-Anruf genannt, auf die durch MEGS vorgefilterten SIM-Karten/Alarme, kann über einen bestimmten Zeitraum die "Besetzt-Rate" der einzelnen SIM-Karten ermittelt werden. Nach Überschreitung eines Schwellwerts für die Besetzt-Rate kann hierdurch ein eindeutiges Signal für weitere Sanktionsmaßnahmen, wie Sperre im HLR (HLR-Barring) oder Anrufunterbrechung (Cancel Location) abgeleitet werden.

Für die Durchführung dieser Ping-Anrufe und der nachfolgenden zusätzlichen Szenarien kann ein SS7/ISUP-Protokoll-Simulator angewandt werden. Das SS7, Signalling System #7 (zu deutsch Signalisierungssystem Nummer 7) umfasst eine Reihe von Protokollen und Verfahren für die Signalisierung in Telekommunikations-Netzen, wie dem öffentlichen Telefonnetz, egal ob ISDN, Festnetz oder Mobilfunknetz.

In so genannten User Parts werden die Funktionen beschrieben, die einem Benutzer zur Verfügung stehen. Diese Funktionen können vom verwendeten Dienst (ISDN, analoges Telefon, Mobilfunk) abhängig sein und werden deshalb getrennt beschrieben. Die hier angesprochenen User Parts sind:
ISUP (ISDN User Part) beschreibt die Funktionen, die ISDN-Benutzern zur Verfügung stehen. Dazu gehört als wichtigstes Element die Beschreibung des Dienstes oder bearer capability. ISDN erlaubt, verschiedene Endgeräte wie Telefon, FAX oder Computer an demselben Anschluss zu betreiben. Bei einer Verbindung im ISDN-Netz wird immer eine Beschreibung des Dienst-Typs mitgesendet, damit nur das Endgerät antwortet, das den gewünschten Dienst auch unterstützt.

SCCP (Signalling Connection Control Part) ist eine Zwischenschicht, die über MTP Level 3 hinaus weitere Funktionen zur Verfügung stellt wie z.B. verbindungslose oder verbindungsorientierte Kommunikation zwischen besonderen Netzfunktionen. Die wichtigste Anwendung, die auf SCCP aufbaut ist "Intelligentes Netz" oder auch IN. IN-Funktionen werden in speziellen Empfehlungen definiert. In manchen Fällen kann auch ISUP (ISDN USer Part) über SCCP statt über MTP3 geführt werden.

MAP (Mobile Application Part) bedient die spezifischen Funktionen vom Mobilfunknetzen. Besonders wichtig ist natürlich Roaming. Mittels Roaming kann ein Teilnehmer von einer Funkzelle in die nächste wechseln ohne Verbindungsverlust und sich in Fremdnetze einbuchen.

Bei der Anwendung von PING-Anrufen ist folgendes zu berücksichtigen:

### 1) Ermittlung der aktuellen VLR-Location

Relevante SS7-Nachricht: Send_RoutingInfo_for_SM (SRI for Short Message) Ergebnis: Anwendung als Orig-Reference im MAP-Teil des SS7-Protokoll. Anfragen mit Operation: Interrogate_SS würden zu einem Cancel_Location (sowie Gesprächsabbruch) des betreffenden Kunden führen, was in diesem Zusammenhang nicht erwünscht ist.

### 2) Abfrage des SS-Status Call Wait, Call Forwarding Unconditional und Call Forwarding BUSY:

Relevante SS7-Nachricht: Interrogate_SS (SS code)
Ergebnis: SS Status des betreffenden Kunden.

Hierbei ist im SCCP-Teil die Adresse des SS7-Simulators und im MAP-Teil (Orig_Reference) die aktuelle VLR-Adresse des Kunden zu verwenden. Ansonsten erfolgt ein Cancel_location durch das HLR.

### 3) Durchführung des PING-Anrufs

### Relevante ISUP-Nachricht: IAM

Ergebnis: Sofern die Nachricht im ISUP2-Protokoll (Version2) übertragen wird, kann unabhängig von Rufumleitung oder Call Wait bereits über die ACM-Nachricht (Address Complete Message) der Status des Kunden (frei oder belegt) ausgewertet werden. Lediglich bei aktiver CFU ist eine Status-Analyse des Outbound-Roamers hierbei nicht möglich (siehe Optionen). Aktuell sind ca. 90% der Roamingbeziehungen innerhalb Europas mit ISUP2-Protokoll angebunden.

Bei einer ISUP1-Verbindung kann lediglich der Status ALERT oder BUSY ausgewertet werden. Hierbei ist jedoch der SS-Status der Analyse aus Punkt 2 zu berücksichtigen. Bei aktivem CFbusy oder CW kann das Ping-Anruf-Ergebnis nicht gewertet werden (siehe Optionen).

### 4) Temporäres Deaktivieren von Call Forwarding und Call Wait

### Relevante ISUP Nachricht: Deactivate_SS, Activate_SS (mit entsprechenden SS code)

Ergebnis: Optional kann bei aktivem CFU oder aktivem CPbusy/CW in Verbindung mit ISUP1" der SS-Dienst im HLR temporär deaktiviert werden. Der anschließende PING-Anruf liefert somit ein eindeutiges Ergebnis zum "Besetz-Status" des Kunden. Die SS7-Nachrlcht "Activate_SS" stellt nach Durchführung des PING-Anrufs den ursprünglichen SS-Status wieder her (inkl. Zielrufnummer) Hinweis: Gesamtdauer zwischen temporärer Deaktivierung und Reaktivierung: beträgt vorzugsweise weniger als 20 Sekunden.

Die Ergebnisse der PING-Anrufe führen zu einer Qualitätssteigerung der Erkennung von tatsächlichen Betrügern bei den ursprünglichen Alarmen um mehr als 90%.

Wiederholungen der Prüfschleife (CF/CW-Status; PING-Anruf bzw. optional: CF/CW-Deaktivierung; PING-ANRUF; CF/CW-Reaktivierung) führen zu einer Indizien-Anreicherung und verfeinern die Aussagekraft dieses Alarmes.

Bei Überschreitung des Schwellwertes für die "Besetzt-Rate" löst MEGS eine Sperre im HLR aus. Laufende Gespräche sind jedoch zusätzlich durch die SS7-Nachricht "Cancel Location" zu unterbrechen (Dauerverbindung des Fraudster). Diese kann ebenfalls durch den SS7-Protokoll-Simulator erfolgen.

Ein Ausführungsbeispiel der Erfindung wird nachfolgend anhand der Zeichnung Figur 1 näher beschrieben.

Ein Roamingteilnehmer befindet sich mit seinem Mobilfunkendgerät 20 unter Verwendung eines persönlichen Teilnehmeridentitätsmoduls, SIM-Karte 20a, im Versorgungsbereich eines fremden Roaming-Mobilfunknetzes FPLMN. Standardgemäß wird überprüft, ob die Gefahr für ein Roaming-Fraud besteht.

Erfindungsgemäß wird nach wie vor das MEGS 24 zur Voranalyse von möglichen Roaming-Frauds verwendet. Das MEGS 24 verfügt über mehrere Roaming-Fraud-Filter, die bei Roaming-Verbindungen auf die SIM-Karten angewendet werden. Werden in Verbindung mit der SIM-Karte 20a des Mobilfunkendgeräts 20 die Filterkriterien festgestellt, so wird vom MEGS 24 ein Alarm-Ticket 25 ausgegeben.

Gemäß Schritt #1 wird das vom MEGS 24 erzeugte Alarm-Ticket 25 mit der variablen Mobilfunkrufnummer (MSISDN) und Mobilteilnehmerkennung (IMSI) der zugehörigen SIM-Karte 20a an einen Protokoll-Simulator 26 zur Alarm-Optimierung weitergeleitet. Dort wird das Alarm-Ticket zunächst durch eine Kontrollanwendung 27 zur Ermittlung des SS-Status bearbeitet.

In einem Schritt #2 erfolgt durch ein Location-Modul 28 des Protokoll-Simulators 26 eine Durchführung einer aktuellen Location-Abfrage (VLR-Adresse), d.h. die Bestimmung des für die SIM-Karte 20a zuständigen Besucherregisters VLR 22 (Visitor Location Register), anhand des MAP-Befehls Send Routing Info for Short Message (SRIfSM).

In einem Schritt #3 erfolgt durch ein SS-Analyse-Modul 29 eine Durchführung einer Prüfung des Status der für die SIM-Karte 20a eingestellten, vermittlungstechnischen Leistungsmerkmale (Supplementary Services) beim zuständigen Heimatregister HLR 23. Die SS-Statusprüfung kann folgende Ergebnisse haben: Halten der Verbindung (Call Wait), Anrufweiterschaltung bei Besetzt (Call Forwarding Busy: CFBusy) und unbedingte Anrufweiterschaltung (Call Forwarding Unconditional: CFU)

Gemäß einem Schritt #4 erfolgt eine Weiterleitung der SS-Prüfergebnisse an verschiedene Module des Protokoll-Simulators 26. Ist beispielsweise CFU nicht aktiviert, so wird die weitere Behandlung an das Modul 30 zur Durchführung eines Ping-Anrufs übergeben.

In einem Schritt #5 erfolgt nun die Durchführung eines PING-ANRUFS. Bei Verwendung des ISUP1-Protokolls (Version 1) erfolgt eine Auswertung von "Alarm" (Alert) oder "Besetzt" (Busy) unter Berücksichtigung des zuvor ermittelten SS-Status. In der Regel ist grundsätzlich eine aktive Rufumleitung zur MobilBox des Teilnehmers aktiviert. In diesem Fall erfolgt eine Weiterleitung des Ergebnisses an das Modul "Optionales temporäres Deaktivieren von SS" 31.

Bei Verwendung des ISUP2-Protokolls (Version 2) erfolgt eine Auswertung über die Nachricht Address Complete Message ACM (Besetzt-Status). Das Auslösen der Verbindung erfolgt unmittelbar nach Erhalt der relevanten Rücknachricht zur Vermeidung von Rufton oder gebührenpflichtigen Verbindungen.

In einem Schritt #6 erfolgt eine Weiterleitung des Ergebnisses an das Modul "Ergebnis" 32. Es wird mit Schritt #7 oder unter bestimmten Bedingungen mit den Schritten 4a bzw. 6a fortgefahren.

### Optionale Zwischenschritte bzw. Alternativen (Schritte #4a bis #6d)

PING-Anrufe mit ISUP1 und aktiven Call Forwarding_{[s1]} Busy (CFbusy) oder Call Wait (CW) sowie SS-Abfragen, welche ein aktives Call Forwarding Unconditional (CFU) ergeben, führen zu einer Weiterleitung an das Modul "Optionale temporäre Deaktivierung von SS" 31. Die Aktivierung/Deaktivierung dieses Moduls führt MEGS 24 aus.

In den Schritten #4a bzw. #6a erfolgt eine Weiterbehandlung im Modul "Optionale temporäre Deaktivierung von SS" 31:
Die hier durchgeführte Aktion umfasst die Deaktivierung aller festgestellten aktiven CF/CW (Ergebnisse des Moduls "SS Analyse"). SS7-Nachricht: deactivate_SS (SS code).

Im SCCP-Teil ist die Adresse des SS7-Simulators und im MAP-Teil (Orig_Reference) die aktuelle VLR-Adresse des Teilnehmers zu verwenden. Ansonsten erfolgt ein Cancel_location durch das HLR 23, welches zum Gesprächsabbruch führt.

Eine Aktualisierung des VLR 22 erfolgt über die Nachricht "insert subscriber data". Diese Nachricht wird vom HLR 23 automatisch an das VLR 22 versandt.

In den Schritten #4b bzw. #6b wird der PING-Anruf 33 durchgeführt. Die Auswertung der PING-Anruf-Ergebnisse erfolgt wie in Schritt #5 beschrieben.

In den Schritten #4c bzw. #6c erfolgt eine Reaktivierung 34 der zuvor deaktivierten SS-Services mit der SS-Nachricht: activate_SS (SS code). Eine vorher aktiv gewesene Umleitung erhält hiermit automatisch die gleiche Zielrufnummer (z.B. MobilBOX) wie zuvor eingerichtet.
Hierbei ist Im SCCP-Teil die Adresse des SS7-Simulators und im MAP-Teil (Orig_Reference) die aktuelle VLR-Adresse des Kunden zu verwenden. Ansonsten erfolgt ein Cancel_location durch das HLR 23, welches zum Gesprächsabbruch führt.

Eine Aktualisierung des VLR 22 erfolgt über die Nachricht "insert subscriber data". Diese Nachricht wird vom HLR 23 automatisch an das VLR 22 versandt.

In den Schritten #4d bzw. #6d erfolgt eine Weiterleitung des Ergebnisses an das Modul "Ergebnis" 32. Das Ergebnis beinhaltet des Besetzt-Status des mit der SIM-Karte 20a betriebenen Mobilfunkendgeräts 20 während eines betrachteten Zeitraums, beispielsweise "Besetzt für mindestes 60 Minuten".

Im Schritt #7 werden die Analyse-Ergebnisse mit den Indizien "Besetzt-Status", MSISDN, IMSI, VLR-ID, ISUP Version, CF-Status und CW-Status vom Ergebnismodul 32 in Form eines optimierten Alarm-Tickets 35 an MEGS 24 übergeben.

In Schritt #8 wertet MEGS 24 das Ergebnis jeder SIM-Karte in einem Schwellwert-Zähler 36 über die "Besetzt-Rate" aus. Hierüber kann festgelegt werden, ab welcher Anzahl von Wiederholungen bzw. welcher "Besetzt-Rate" eine Sperre der betreffenden SIM-Karte 20a eingeleitet werden kann.

In Schritt #9 wird ein weiterer PING-ANRUF eingeleitet, nach dem gleichen Szenario, wie es in den Schritten #2 - #6 beschrieben wurde, falls die geforderte Anzahl der Wiederholungen noch nicht erreicht ist. Eine Wiederholungssteuerung 37 prüft hierbei die geforderte Verzögerung zwischen den PING-ANRUFen und übernimmt eine weitere Steuerungen der Wiederholungs-Funktion (siehe Fig. 1).

In Schritt #10 wird ein weiterer PING-ANRUF über die Eingangsschnittstelle (Kontrollanwendung 27) zwischen MEGS 24 und Protokoll-Simulator 26 angestoßen.

Die Schritte #11 und #12 bezeichnen die Wiederholung der Schritte #1 - #7 (Wiederholungs-Funktion) wie oben beschrieben.

Gemäß Schritt #13 wird, sofern die geforderte Anzahl der Wiederholungen erreicht ist, kein weiterer PING-ANRUF eingeleitet. Das Prüfmodul Schwellwert-Zähler 36 prüft, ob die "Besetz-Rate" der betreffenden SIM-Karte den definierten Schwellwert (z.B. 60 Minuten) überschritten hat.

Gemäß Schritt #14 wird bei überschrittenem Schwellwert für die betreffende SIM-Karte 20a ein Signal zur Einleitung der Sperre an das Modul "Blockierung" 38 gesendet.

Gemäß Schritt #15 veranlasst das Modul "Blockierung" 38 die Sperre der SIM-Karte im HLR 23 (Barring) sowie ein Signal an den Protokoll-Simulator 26 für das Versenden der Nachricht "Cancel Location". Hierzu wird der VLR-Global Title angewandt, welcher durch das Prüf-Modul "Location" 28 (SRIfSM) festgestellt wurde.

Gemäß Schritt #16 sendet der Protokoll-Simulator 26 die Nachricht "Cancel Location" über das Modul Cancel Location 39 an das aktuelle VLR 22. Hierdurch bricht ein bestehendes Gespräch ab und die betreffende SIM-Karte 20a muss sich im VLR 22 neu einbuchen. Bei weiteren Aktivitäten der SIM-Karte wirkt die neu aktivierte SIM-Sperre im HLR 23 durch MEGS 24. Entsprechende Parameter zur Sperrung der SIM werden durch die Nachricht "insert subscriber data" automatisch vom HLR 23 an das VLR 22 übertragen.

Durch die Optimierung der Frauderkennung nach vorgeschlagen Konzept besteht die Möglichkeit. die durch sogenannten Roaming-Fraud entstandenen Verluste wesentlich zu senken.

### Liste der Bezugszeichen

### #1 bis #16 Verfahrensschritte

- 20: Mobilfunkendgerät
- 20a: SIM-Karte
- 21: Roaming-Mobilfunknetz (FPLMN)
- 22: Besucherregister VLR (des FPLMN)
- 23: Heimatregister HLR (des HPLMN)
- 24: MEGS (Missbrauchserkennungssystem)
- 25: Alarm-Ticket
- 26: Protokoll-Simulator
- 27: Kontrollanwendung (SS-Status)
- 28: Modul "Location"
- 29: Modul "SS-Analyse"
- 30: Modul "PING-Anruf"
- 31: Modul "CF/CW Deaktivierung"
- 32: Modul Ergebnis"
- 33: Modul "PING-Anruf"
- 34: Modul "CF/CW Reaktivierung"
- 35: Optimiertes Alarm-Ticket
- 36: Modul "Schwellwert-Zähler"
- 37: Modul "Wiederholungs-Steuerung"
- 38: Modul "Blockierung"
- 39: Modul "Cancel Location"

## Patentansprüche

1. Verfahren zur Frauderkennung in mobilen Kommunikationsnetzen, insbesondere zur Frauderkennung bei Roamingverbindungen, bei dem zur Voranalyse von möglichen Roaming-Frauds ein bestehendes Missbrauchserkennungssystem, MEGS, (24) verwendet wird, und bei einem durch MEGS (24) erkannten, auffälligen Teilnehmerindentitätsmodul, SIM-Karte, (20a) eine dem Teilnehmeridentitätsmodul zugeordnete Roamingverbindung anhand von mindestens einem zusätzlichen Kriterium auf einen möglichen Missbrauch überprüft wird,
**dadurch gekennzeichnet,**
**dass** als Kriterium die "Besetzt-Rate" des betreffenden Teilnehmeridentitätsmoduls (20a) während eines bestimmten Zeitraums geprüft wird, wobei die Besetzt-Rate des Teilnehmeridentitätsmoduls (20a) anhand mindestens eines Testanrufs, PING-Anruf, an das Teilnehmeridentitätsmodul ermittelt wird, wobei zur Durchführung des PING-Anrufs ein SS7/ISUP-Protokoll-Simulator (26) verwendet wird, dass vor der Ausführung des PING-Anrufs der aktuelle Aufenthaltsort des Teilnehmeridentitätsmoduls (20a) anhand einer Abfrage der aktuellen VLR-Adresse bestimmt wird (#2),
**dass** unter Verwendung der VLR-Adresse und vor der Ausführung des PING-Anrufs der aktuelle SS-Status des Teilnehmeridentitätsmoduls, umfassend Call Wait, CW, Call Forwarding Unconditional, CFU, und Call Forwarding BUSY, CFBusy, beim Heimatregister, HLR, (23) ermittelt wird (#3), und
**dass** bei aktivem CFU oder aktivem CFBusy/CW in Verbindung mit ISUP1 der SS-Dienst im HLR temporär deaktiviert wird (31), anschließend der PING-Anruf durchgeführt wird (33), und nach Durchführung des PING-Anrufs der ursprüngliche SS-Status wieder hergestellt wird (34).

2. Verfahren nach Anspruch 1, **dadurch gekennzeichnet, dass** im Falle die Besetzt-Rate einen bestimmten zeitlichen Schwellwert überschreitet, Maßnahmen zur Missbrauchsverhinderung gegenüber dem Teilnehmeridentitätsmodul (20a) eingeleitet werden.

3. Verfahren nach einem der vorhergehenden Ansprüche, **dadurch gekennzeichnet, dass** die Maßnahmen zur Missbrauchsverhinderung eine Sperre im HLR (23), HLR-Barring, oder eine Anrufunterbrechung, Cancel Location, umfassen.

4. Verfahren nach einem der vorhergehenden Ansprüche, **dadurch gekennzeichnet, dass** anhand des Ping-Anrufs, bei einer ISUP2-Verbindung, unabhängig von Rufumleitung oder Call Wait bereits über die ACM-Nachricht, Address Complete Message, der Status des Teilnehmeridentitätsmoduls ausgewertet werden kann, wobei bei aktiver CFU eine Status-Analyse des Outbound-Roamers nicht möglich ist.

5. Verfahren nach einem der vorhergehenden Ansprüche, **dadurch gekennzeichnet, dass** anhand des Ping-Anrufs, bei einer ISUP1-Verbindung, der Status ALERT oder BUSY ausgewertet werden kann, wobei bei aktivem CFbusy oder CW das Ping-Anruf-Ergebnis nicht gewertet werden kann.

6. Vorrichtung zur Durchführung des Verfahrens gemäß einem der Ansprüche 1 bis 5, umfassend ein Missbrauchserkennungssystem MEGS (24) und einen Protokoll-Simulator (26).

7. Datenverarbeitungsprogramm mit einem Programmcode, der auf einer oder mehreren Datenverarbeitungseinrichtungen ausgeführt ein Verfahren nach einem der Ansprüche 1 bis 5 durchführt.

8. Datenverarbeitungsprogrammprodukt, das einen auf einer oder mehreren Datenverarbeitungseinrichtungen ausführbaren Programmcode zur Durchführung des Verfahrens nach einem der Ansprüche 1 bis 5 umfasst.

## Claims

1. Method for fraud detection in mobile communications networks, in particular for fraud detection in roaming connections, in which an existing misuse detection system, MEGS, (24) is used for preliminary analysis of possible roaming frauds, and in a conspicuous subscriber identity module, SIM card, (20a) detected by MEGS (24), a roaming connection assigned to the subscriber identity module is checked for possible misuse using at least one additional criterion, **characterised in that** as the criterion, the "busy rate" of the relevant subscriber identity module (20a) is checked during a certain period of time, wherein the busy rate of the subscriber identity module (20a) is ascertained using at least one test call, PING call, to the subscriber identity module, wherein an SS7/ISUP protocol simulator (26) is used to carry out the PING call, **in that** before executing the PING call, the current location of the subscriber identity module (20a) is determined using an enquiry of the current VLR address (#2), **in that** using the VLR address and before executing the PING call, the current SS status of the subscriber identity module, comprising Call Wait, CW, Call Forwarding Unconditional, CFU, and Call Forwarding BUSY, CFBusy, is ascertained in the home register, HLR, (23) (#3), and **in that** for active CFU or active CFBusy/CW in combination with ISUP1, the SS service in the HLR is temporarily deactivated (31), then the PING call is carried out (33), and after carrying out the PING call, the original SS status is restored (34).

2. Method according to claim 1, **characterised in that** in the case of the busy rate exceeding a certain time threshold, measures for misuse prevention with respect to the subscriber identity module (20a) are introduced.

3. Method according to one of the preceding claims, **characterised in that** the measures for misuse prevention comprise barring in the HLR (23), HLR barring, or call disconnection, Cancel Location.

4. Method according to one of the preceding claims, **characterised in that** using the Ping call, in an ISUP2 connection, independently of the call redirection or Call Wait even via the ACM message, Address Complete Message, the status of the subscriber identity module may be evaluated, wherein for active CFU, a status analysis of the Outbound Roamer is not possible.

5. Method according to one of the preceding claims, **characterised in that** using the Ping call, for an ISUP1 connection, the status ALERT or BUSY may be evaluated, wherein for active CFbusy or CW, the Ping call result cannot be assessed.

6. Device for carrying out the method according to one of claims 1 to 5, comprising a misuse detection system MEGS (24) and a protocol simulator (26).

7. Data-processing program having a program code which carries out a method according to one of claims 1 to 5 executed on one or more data-processing devices.

8. Data-processing program product which comprises a program code which can be executed on one or more data-processing devices for carrying out the method according to one of claims 1 to 5.

## Revendications

1. Procédé pour la détection de fraude dans des réseaux de communication mobiles, en particulier pour la détection de fraude dans des communications itinérantes, selon lequel pour une analyse préalable d'éventuelles fraudes d'itinérance est utilisé un système de détection d'itinérance, MEGS, (24) existant et qu'en présence d'un module d'identité d'abonné, carte SIM, (20a) visible détecté par le MEGS (24), une communication itinérante associée au module d'identité d'abonné est contrôlée à l'aide d'au moins un critère supplémentaire pour voir s'il y a un éventuel abus,
**caractérisé en ce que** c'est le "taux d'occupation" du module d'identité d'abonné concerné (20a) pendant une période définie qui est contrôlé comme critère, étant précisé que le taux d'occupation du module d'identité d'abonné (20a) est déterminé à l'aide d'au moins un appel test, appel PING, dudit module d'identité, et que pour procéder à cet appel PING, un simulateur de protocole SS7/ISUP (26) est utilisé,
**en ce qu'**avant l'appel PING, la position actuelle du module d'identité d'abonné (20a) est définie (#2) à l'aide d'une interrogation de l'adresse VLR actuelle,
**en ce qu'**à l'aide de l'adresse VLR et avant l'appel PING, l'état SS actuel du module d'identité d'abonné, qui comprend Call Wait, CW, Call Forwarding Unconditional, CFR, et Call Forwarding BUSY, CFBusy, est déterminé (#3) au niveau de l'enregistreur de localisation nominal, HLR, (23), et
**en ce qu'**en présence d'un CFU actif ou d'un CFBusy/CW actif en liaison avec ISUP1 le service SS dans l'enregistreur HLR est temporairement désactivé (31), l'appel PING est ensuite réalisé (33), et après cet appel PING, l'état SS initial est rétabli (34).

2. Procédé selon la revendication 1, **caractérisé en ce que**, au cas où le taux d'occupation dépasse une valeur seuil temporelle définie, des mesures sont prises pour empêcher un abus, par rapport au module d'identité d'abonné (20a).

3. Procédé selon l'une des revendications précédentes, **caractérisé en ce que** les mesures pour empêcher un abus comprennent une interdiction dans l'enregistreur HLR (23), HLR-Barring, ou une interruption de l'appel, Cancel Location.

4. Procédé selon l'une des revendications précédentes, **caractérisé en ce que**, à l'aide de l'appel Ping, lors d'une communication ISUP2, indépendamment d'un transfert d'appel ou de Call Wait l'état du module d'identité d'abonné peut déjà être analysé par l'intermédiaire du message ACM, Address Complete Message, étant précisé qu'en présence d'un CFU actif, une analyse d'état de l'abonné itinérant sortant n'est pas possible.

5. Procédé selon l'une des revendications précédentes, **caractérisé en ce que**, à l'aide de l'appel Ping, en présence d'une communication ISUP1, l'état ALERT ou BUSY peut être analysé, étant précisé qu'en présence d'un CFBusy ou d'un CW actifs, le résultat de l'appel Ping ne peut pas être analysé.

6. Dispositif pour la mise en oeuvre du procédé selon l'une des revendications 1 à 5, comprenant un système de détection d'abus MEGS (24) et un simulateur de protocole (26).

7. Programme de traitement de données avec un code de programme qui, exécuté sur un ou plusieurs dispositifs de traitement de données, met en oeuvre un procédé selon l'une des revendications 1 à 5.

8. Produit de programme de traitement de données qui comprend un code de programme apte à être exécuté sur un ou plusieurs dispositifs de traitement de données pour la mise en oeuvre du procédé selon l'une des revendications 1 à 5.
